# EUROPÄISCHE PATENTSCHRIFT

(11) **EP 1 655 522 B1**
(45) Veröffentlichungstag und Bekanntmachung des Hinweises auf die Patenterteilung: **04.06.2008**
(21) Anmeldenummer: 05405572.8
(22) Anmeldetag: 06.10.2005
(51) Int. Cl.: F16J 9/20

(54) **Kolbenring**
Piston ring
Segment de piston

(30) Priorität: 05.11.2004 EP 04405681
(43) Veröffentlichungstag der Anmeldung: 10.05.2006
(73) Patentinhaber: Wärtsilä Schweiz AG, 8401 Winterthur (CH)
(72) Erfinder: Amoser, Matthias, Dr., 8492 Wila (CH)
(74) Vertreter: Sulzer Management AG

(56) Entgegenhaltungen:
- DE-A1- 4 419 713
- DE-A1- 10 117 164
- DE-C1- 19 720 779
- FR-A- 1 147 542
- GB-A- 115 829
- GB-A- 191 518 050

## Beschreibung

Die Erfindung betrifft einen Kolbenring für einen Kolben einer Hubkolben-Brennkraftmaschinen gemäss Oberbegriff von Anspruch 1, ein Kolbenringpaket mit derartigen Kolbenringen für einen Kolben, einen Kolben mit einem derartigen Kolbenring oder Kolbenringpaket sowie eine Hubkolben-Brennkraftmaschine mit einem derartigen Kolben.

Die Kolben von Hubkolben-Brennkraftmaschinen, insbesondere Hubkolben-Brennkraftmaschinen der Dieselbauart sind mit Kolbenringen versehen, die in Nuten des Kolbens sitzen und dazu dienen, den Zylinderraum nach aussen abzudichten. Die in Hubkolben-Brennkraftmaschinen und speziell in Hobkolben-Brennkraftmaschinen der Zweitakt-Grossdieselbauart verwendeten Kolbenringe weisen meist einen im Wesentlichen rechteckigen Querschnitt auf. Durch eine spezielle Formgebung der Lauffläche der Kolbenringe können im Bereich der Lauffläche geringfügige Abweichungen von der Rechteckform auftreten. Die in axialer Richtung gemessene Höhe herkömmlicher Kolbenringe ist ab Nenndurchmesser von 100 mm normalerweise deutlich kleiner als die Querschnittsabmessung in radialer Richtung, d.h. als die Differenz zwischen Aussen- und Innendurchmesser. Von grösseren axialen Höhen wird normalerweise abgeraten, da die damit verbundene Massenzunahme und die im Betrieb auftretenden Trägheitskräfte negative Auswirkungen auf das Betriebsverhalten der Kolbenringe haben. Dies gilt insbesondere für schneller laufende Hubkolben-Brennkraftmaschinen. Typische Werte für die axiale Höhe in Abhängigkeit des Nenndurchmessers der Kolbenringe sind beispielsweise in DIN 34110 aufgeführt.

Solche Kolbenringe sind bekannt aus z.B. DE 197 20 779 C1.

Ein Nachteil derartiger Kolbenringe besteht darin, dass sie im Betrieb zu Schwingungen angeregt werden. Besonders störend sind dabei die Biege- und Torsionsschwingungen der Kolbenringe. Die Schwingungen führen zu Schlägen auf die Nutwand und insbesondere zu einer Abnützung der vorderen Kanten der Nut. Damit verschiebt sich der Auflagepunkt des Kolbenrings ins Innere der Nut. Der Kolbenring liegt dann nicht mehr stabil in der Nut, was die Abnützung weiter erhöht.

Aufgabe der Erfindung ist es, einen Kolbenring für einen Kolben einer Hubkolben-Brennkraftmaschine der Zweitakt-Grossdieselbauart zur Verfügung zu stellen, der gegenüber dem Stand der Technik eine höhere Biege- und Torsionssteifigkeit aufweist und im Betrieb stabil in der Nut des Kolbens liegt. Eine weitere Aufgabe besteht darin, ein Kolbenringpaket mit derartigen Kolbenringen für einen Kolben, einen Kolben mit einem derartigen Kolbenring oder Kolbenringpaket sowie eine Hubkolben-Brennkraftmaschine mit einem derartigen Kolben zur Verfügung zu stellen.

Diese Aufgabe wird erfindungsgemäss durch den in Anspruch 1 definierten Kolbenring, das in Anspruch 8 definierte Kolbenringpaket und den in Anspruch 9 definierten Kolben gelöst, sowie durch die in Anspruch 10 definierte Hubkolben-Brennkraftmaschine.

Der erfindungsgemässe Kolbenring für einen Kolben einer Hubkolben-Brennkraftmaschine der Zweitakt-Grossdieselbauart, weist einen äusseren und inneren Radius rₐ, rᵢ und eine in axialer Richtung gemessene Höhe H auf sowie eine Breite B, die der Differenz zwischen äusserem und innerem Radius entspricht, wobei die Höhe des Kolbenrings grösser oder gleich der Breite des Kolbenrings ist. Vorzugsweise beträgt das Höhen/Breiten-Verhältnis des Kolbenrings mindestens 1:1, insbesondere mindestens 1.1:1 oder 1.5:1.

Am Kolbenring ist eine Lauffläche, eine obere und untere Oberfläche und eine der Lauffläche gegenüberliegende innere Oberfläche ausgebildet, wobei mindestens die Lauffläche eine Schutzschicht aufweist, beispielsweise eine verschleissmindernde Schutzschicht und/oder eine Einlaufschicht. Selbstverständlich können auch die übrigen Oberflächen mit einer Schutzschicht versehen sein.

Das Grundmaterial des Kolbenrings besteht aus Gusseisen, insbesondere Gusseisen mit Lamellengraphit oder Vermiculargraphit oder Kugelgraphit. In einer weiteren bevorzugten Ausführungsvariante wurde die Schutzschicht galvanisch oder in einem thermischen Spritzverfahren aufgebracht. Vorzugsweise wurde die Schutzschicht eingeschmolzen oder Schutzschicht und Grundwerkstoff aufgeschmolzen, und/oder die Schutzschicht durch Eindiffundieren von Fremdatomen in das Grundmaterial erzeugt. Vorzugsweise wird die für die Bildung der Schutzschicht und/oder die für die schweissmetallurgische Verbindung notwendige Wärme in einem lokal begrenzten Bereich zugeführt, beispielsweise mittels Laser oder durch induktive Erwärmung.

Vorzugsweise ist die Lauffläche des Kolbenrings am oberen und unteren Rand abgeschrägt oder abgerundet und mindestens über einen Teil der axialen Höhe nach aussen gewölbt und/oder konisch ausgebildet.

In einer weiteren bevorzugten Ausführungsform umfasst der Kolbenring ein im Wesentlichen gasdichtes Schloss, beispielsweise indem im Schloss aneinanderstossende Trennflächen in Umfangrichtung und senkrecht zur Achse des Kolbenrings ausgebildet sind.

Weiter umfasst die Erfindung ein Kolbenringpaket für einen Kolben einer Hubkolben-Brennkraftmaschine, das aus mehreren Kolbenringen der in den oben stehenden Abschnitten beschriebenen Art besteht, vorzugsweise aus mehreren Kolbenringen gleicher Breite und einen Kolben mit mindestens einem derartigen Kolbenring oder mit einem derartigen Kolbenringpaket sowie eine Hubkolben-Brennkraftmaschine der Zweitakt-Grossdieselbauart, mit mindestens einem derartigen Kolben.

Der erfindungsgemässe Kolbenring weist dank der grösseren axialen Höhe eine wesentlich höhere Biege- und Torsionssteifigkeit auf. Dadurch werden störende Biege- und Torsionsschwingungen während dem Betrieb wirksam reduziert oder ganz vermieden. Dies ermöglicht eine stabile Auflage des Kolbenrings in der Nut. Bei der Nachbearbeitung des Zylinders oder Zylindereinsatzes entstehen und/oder verbleiben Unregelmässigkeiten in der Kontur wie beispielsweise Unterschiede im Durchmesser. So betragen beispielsweise die Unterschiede im Durchmesser eines Zylindereinsatzes einer Zweitakt-Grossdiesel-Brennkraftmaschine im Betriebszustand bis zu 0.2 mm. Die grössere axiale Höhe des erfindungsgemässen Kolbenrings erlaubt einen besseren Ausgleich derartiger Unterschiede und eine bessere Anpassung an die vorhandene Kontur. Insbesondere ergibt die grössere axiale Höhe eine grössere Lauf- und Auflagefläche und damit verbunden eine Zunahme der hydrodynamischen Gegenkräfte und der Dicke des Schmierölfilms im Betrieb. Dies erleichtert die Anpassung des Kolbenrings an die Zylinderkontur und vermindert den Verschleiss sowohl an der Lauffläche des Kolbenrings als auch am Zylinder beziehungsweise Zylindereinsatz.

Der efindungsgemässe Kolbenring erlaubt zudem, an demselben ein im Wesentlichen gasdichtes Schloss vorzusehen. Ein derartiges Schloss umfasst vorstehende Teile, die dazu neigen, abzubrechen, wenn die axiale Höhe, wie in herkömmlichen Kolbenringen üblich, gering ist. Dank der grösseren axialen Höhe des erfindungsgemässen Kolbenrings können die vorstehenden Teile stabil ausgebildet werden.

Weitere vorteilhafte Ausführungsformen gehen aus den abhängigen Ansprüchen und der Zeichnung hervor.

Im Folgenden wird die Erfindung an Hand des Ausführungsbeispiels und an Hand der Zeichnung näher erläutert. Es zeigen:
- Fig. 1: eine Detailansicht eines in einen Kolben eingebauten Kolbenrings aus dem Stand der Technik im Schnitt,
- Fig. 2: Ausführungsbeispiel eines Kolbenrings gemäss der vorliegenden Erfindung,

- Fig. 3a - c: Detailansichten von drei verschieden Schlossvarianten, und
- Fig. 4: einen Schnitt durch eine Ausführungsvariante eines Kolbenrings gemäss vorliegender Erfindung mit profilierter Lauffläche und Schutzschicht.

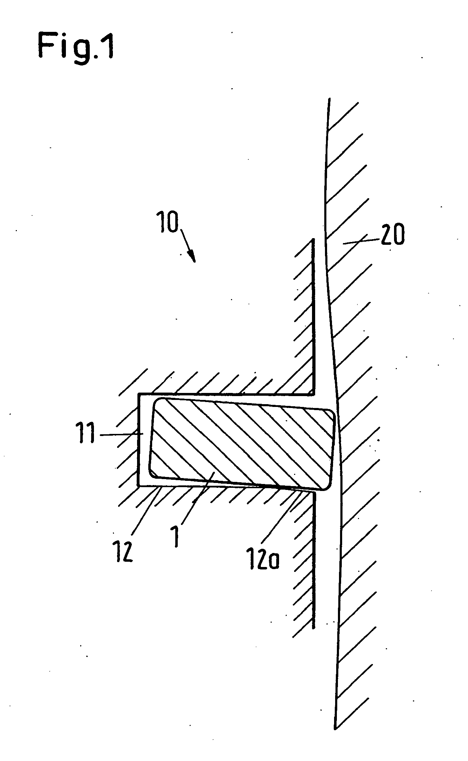

Fig. 1 zeigt eine Detailansicht eines in einen Kolben eingebauten Kolbenrings 1 aus dem Stand der Technik im Schnitt. Der Kolben 10, von dem lediglich ein Ausschnitt gezeigt ist, bewegt sich im Betrieb längs der Innenwand eines Zylinders oder Zylindereinsatzes 20. Zwischen dem Kolben und der Innenwand des Zylinders beziehungsweise Zylindereinsatzes ist ein Spalt ausgebildet dessen Breite auf Grund von Unregelmässigkeiten in der Zylinderkontur geringfügig variieren kann. Im Kolben 10 ist eine Nut 11 ausgebildet, in der ein herkömmlicher Kolbenring 1 mit im Wesentlichen rechteckigem Querschnitt angeordnet ist. Die Abmessungen des Kolbenrings 1 sind so gewählt, dass er lose in der Nut 11 sitzt und die Lauffläche des Kolbenrings die Innenwand des Zylinders beziehungsweise Zylindereinsatzes 20 berührt. Auf diese Weise kann der Kolbenring im Betrieb der Kontur des Zylinders beziehungsweise Zylindereinsatzes folgen, selbst wenn diese Unregelmässigkeiten aufweist. Dadurch, dass der Kolbenring lose in der Nut sitzt, ist der im Betrieb im Zylinder herrschende Druck auch zwischen Nut und Kolbenring wirksam, so dass derselbe sowohl durch die Eigenspannung des Kolbenrings als auch durch den Druck gegen die Innenwand des Zylinders beziehungsweise Zylindereinsatzes gedrückt wird.

Auf Grund der begrenzten Biege- und Torsionssteifigkeit herkömmlicher Kolbenringe wird der Kolbenring 1, wie in Fig. 1 gezeigt, durch die im Betrieb auf den Kolbenring wirkenden Reibungskräfte und dynamischen Kräfte in der Nut verdreht. Dadurch liegt der Kolbenring nicht mehr gleichmässig auf der Nutwand 12 auf, sondern verstärkt auf der vorderen Kante 12a der Nut. Die wechselnde Richtung der Kolbenbewegung führt bei herkömmlichen Kolbenringen zu einer wechselnden Verdrehung der Kolbenringe und zu Biege- und Torsionsschwingungen und damit verbunden zu Schlägen auf die Nutwand 12 und zu einer verstärkten Abnützung der vorderen Kanten 12a der Nut 11.

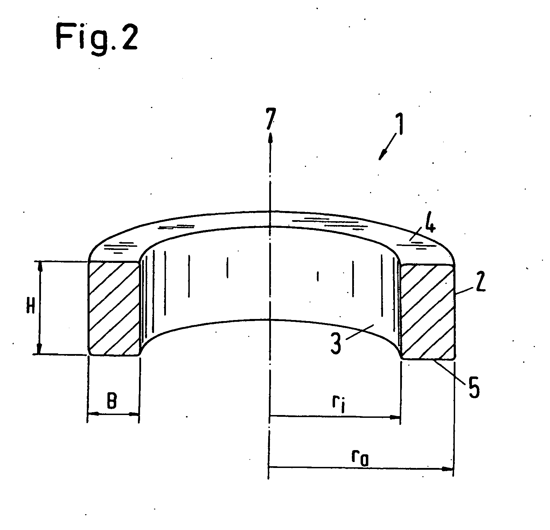

Fig. 2 zeigt ein Ausführungsbeispiel eines Kolbenrings gemäss der vorliegenden Erfindung. Der gezeigte Kolbenring dient zur Abdichtung eines Kolbens einer Hubkolben-Brennkraftmaschine der Zweitakt-Grossdieselbauart. Der Kolbenring 1 weist einen äusseren und inneren Radius rₐ, rᵢ und eine in axialer Richtung 7 gemessene Höhe H auf sowie eine Breite B, die der Differenz rₐ - rᵢ zwischen äusserem und innerem Radius entspricht, wobei die Höhe H des Kolbenrings 1 grösser oder gleich der Breite B des Kolbenrings ist. Weiter weist der Kolbenring 1 eine Lauffläche 2, eine obere und untere Oberfläche 4, 5 und eine der Lauffläche 2 gegenüberliegenden inneren Oberfläche 3 auf. Zweckmässigerweise beträgt das Höhen/Breiten-Verhältnis H:B mindestens 1:1 und mit Vorteil mindestens 1.1:1 oder 1.5:1. Ein derartiger Kolbenring besitzt eine wesentlich höhere Biege- und Torsionssteifigkeit als ein herkömmlicher Kolbenring mit demselben Durchmesser. Dank der höheren Biege- und Torsionssteifigkeit ist die Verdrehung eines derartigen Kolbenrings durch die im Betrieb auftretenden Reibungskräfte und dynamischen Kräfte praktisch vernachlässigbar.

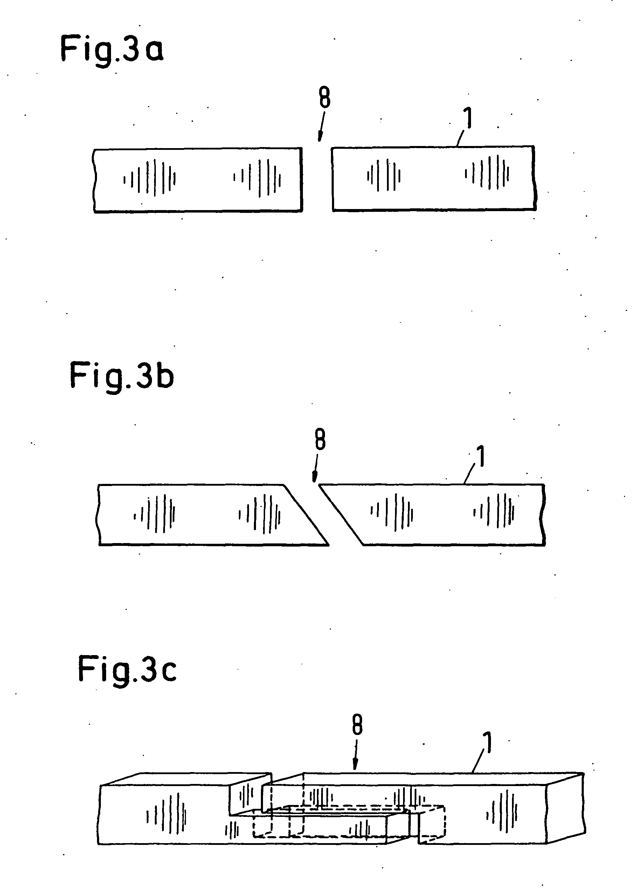

Im Kolbenring 1 ist, wie in den Figuren 3a - c dargestellt an einer Stelle eine Trennfuge 8 ausgebildet, die auch als Schloss bezeichnet wird. Dank dem Schloss kann sich der Kolbenring an Unregelmässigkeiten im Durchmesser des Zylinders beziehungsweise Zylindereinsatzes anpassen. Weiter erleichtert das Schloss den Einbau des Kolbenrings in den Kolben und ermöglicht eine vorgegebene Eigenspannung des Kolbenrings im Betrieb. Fig. 3 a zeigt eine Detailansichten einer einfachen Schlossvariante. Das Schloss besteht bei dieser Variante aus einer in axialer Richtung verlaufenden Trennfuge. Neben dem Vorteil geringer Herstellungskosten weist diese Variante den Nachteil auf, dass die Dichtwirkung der Trennfuge gering ist. Fig. 3b zeigt eine weitere Schlossvariante mit schräg verlaufender Trennfuge. Auch diese Variante ist einfach herzustellen.

In der in Fig. 3c gezeigten Schlossvariante sind an einem Ende des Kolbenrings eine Zunge und am andern Ende eine Aussparung ausgebildet, die sich über einen Teil der Breite und Höhe des Kolbenrings erstrecken. Die Zunge und die Aussparung sind so ausgebildet und angeordnet, dass sie in Umfangrichtung des Kolbenrings aufeinander gleitend verschiebbar sind. Dank der Zunge sind die Trennfugen im Bereich der Zunge sowohl in axialer als auch in radialer Richtung unterbrochen. Die in Fig. 3c gezeigte Ausführungsvariante wird deshalb auch als "gasdichtes" Schloss bezeichnet. Bei einem herkömmlichen Kolbenring mit geringer axialer Höhe ist die Zunge sehr dünn und neigt zum Abbrechen, weshalb häufig auf ein gasdichtes Schloss verzichtet wird. Im Gegensatz dazu kann der erfindungsgemässe Kolbenring dank seiner relativ grossen axialen Höhe problemlos mit einem gasdichten Schloss versehen werden.

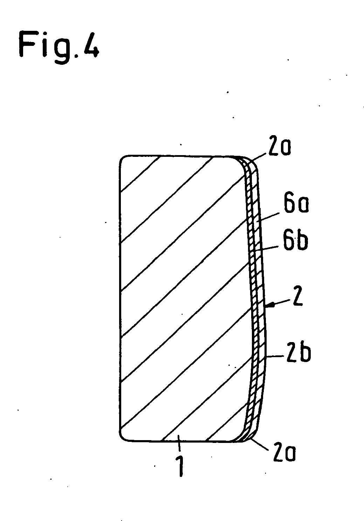

Fig. 4 zeigt ein Schnitt durch eine Ausführungsvariante eines Kolbenrings gemäss vorliegender Erfindung. Der Kolbenring 1 umfasst eine Lauffläche 2, die in dieser Ausführungsvariante beispielsweise eine verschleissmindernde Schutzschicht 6b und auf derselben wahlweise eine Einlaufschicht 6a aufweist. Bei Bedarf können auch die übrigen Oberflächen des Kolbenrings mit einer Schutzschicht versehen sein. Das Grundmaterial des Kolbenrings besteht aus Gusseisen, beispielsweise aus Gusseisen mit Lamellengraphit, Vermiculargraphit oder Kugelgraphit. Je nach Art der Brennkraftmaschine sind auch andere Grundmaterialien einsetzbar. Die Schutzschicht oder Schutzschichten können beispielsweise galvanisch oder in einem thermischen Spritzverfahren aufgebracht werden. Die Schutzschicht kann eingeschmolzen, verschweisst, verlötet und/oder durch Eindiffundieren von Fremdatomen in das Grundmaterial erzeugt werden. Vorzugsweise wird die für die Bildung der Schutzschicht notwendige Wärme in einem lokal begrenzten Bereich zugeführt, beispielsweise mittels Laser oder durch induktive Erwärmung. Der aufgeschmolzene Bereich umfasst beispielsweise ein Beschichtungspulver und/oder eine Lötmasse und/oder die Oberfläche des Grundmaterials. Bevorzugt wird die Oberfläche nur leicht aufgeschmolzen, und nur soweit, dass eine metallurgische Verbindung mit dem Beschichtungspulver entsteht.

In der in Fig. 4 gezeigten Ausführungsvariante ist die Lauffläche 2 am oberen und unteren Rand 2a abgerundet und in einem dazwischen liegenden Bereich 2b nach aussen gewölbt. An den Rändern 2a der Lauffläche kann an Stelle einer Abrundung auch eine Abschrägung vorgesehen werden.

In einer vorteilhaften Ausführungsform ist ein Kolben mit mehreren Kolbenringen gemäss vorliegender Erfindung versehen, beispielsweise mit drei bis fünf Kolbenringen. Die Kolbenringe für einen Kolben werden auch als Kolbenringpaket bezeichnet, wobei die einzelnen Kolbenringe je nach Einbaulage im Kolben unterschiedliche Eigenschaften haben können. So kann beispielsweise die axiale Höhe und/oder das Schloss der einzelnen Kolbenringe je nach Einbaulage im Kolben unterschiedlich ausgebildet sein, um optimale Dichtungs- und Laufeigenschaften zu erzielen. Mit Vorteil wird das Kolbenringpaket aus Kolbenringen gleicher Breite gebildet.

Ein Kolbenring 1 für einen Kolben 10 einer Hubkolben-Brennkraftmaschine, der Zweitakt-Grossdieselbauart, weist einen äusseren und inneren Radius und eine in axialer Richtung gemessene Höhe H auf sowie eine Breite B, die der Differenz zwischen äusserem und innerem Radius entspricht, wobei die Höhe des Kolbenrings grösser oder gleich der Breite des Kolbenrings ist. Ein derartiger Kolbenring weist gegenüber herkömmlichen Kolbenringen eine wesentlich höhere Biege- und Torsionssteifigkeit auf. Damit sind im Betrieb auftretende Biege- und Torsionsschwingungen und die damit verbundenen Abnützungen an Kolbenring, Nut und Zylindereinsatz weitgehend vernachlässigbar.

## Patentansprüche

1. Kolbenring (1) mit einem Grundmaterial aus Gusseisen für einen Kolben (10) einer Hubkolben-Brennkraftmaschine der Zweitakt-Grossdieselbauart, welcher Kolbenring (1) einen äusseren und inneren Radius (rₐ, rᵢ), eine in axialer Richtung gemessene Höhe (H) und eine Breite (B) aufweist, die der Differenz zwischen äusserem und innerem Radius entspricht, und eine Lauffläche (2), eine obere und untere Oberfläche (4, 5) und eine der Lauffläche (2) gegenüberliegende innere Oberfläche (3) umfasst, wobei mindestens die Lauffläche (2) eine Schutzschicht (6a, 6b) aufweist, **dadurch gekennzeichnet, dass** die Höhe des Kolbenrings (1) grösser oder gleich der Breite des Kolbenrings ist.

2. Kolbenring nach Anspruch 1 mit einem Höhen/Breiten-Verhältnis von mindestens 1.1:1, insbesondere mindestens 1.5:1.

3. Kolbenring nach einem der Ansprüche 1 oder 2, wobei die Schutzschicht als verschleissmindernde Schutzschicht (6b) und/oder als Einlaufschicht (6a) ausgebildet ist.

4. Kolbenring nach einem der vorangehenden Ansprüche, wobei das Gusseisen Lamellengraphit oder Vermiculargraphit oder Kugelgraphit enthält.

5. Kolbenring nach einem der Ansprüche 3 oder 4, wobei die verschleissmindernde Schutzschicht beziehungsweise die Einlaufschicht galvanisch oder in einem thermischen Spritzverfahren aufgebracht ist und/oder die verschleissmindernde Schutzschicht durch Eindiffundieren von Fremdatomen in das Grundmaterial erzeugt ist.

6. Kolbenring nach einem der vorangehenden Ansprüche mit einer Lauffläche (2), deren oberer und unterer Rand abgeschrägt oder abgerundet ist und mindestens über einen Teil der axialen Höhe nach aussen gewölbt und/oder konisch ausgebildet ist.

7. Kolbenring nach einem der vorangehenden Ansprüche mit einem im Wesentlichen gasdichten Schloss.

8. Kolbenringpaket für einen Kolben einer Hubkolben-Brennkraftmaschine, welches Kolbenringpaket aus mehreren, Kolbenringen nach einem der vorangehenden Ansprüche besteht, insbesondere aus mehreren Kolbenringen gleicher Breite.

9. Kolben mit mindestens einem Kolbenring nach einem der Ansprüche 1 bis 7 oder mit einem Kolbenringpaket nach Anspruch 8.

10. Hubkolben-Brennkraftmaschine der Zweitakt-Grossdieselbauart, mit mindestens einem Kolben nach Anspruch 9.

## Claims

1. A piston ring (1) having a base material of cast iron for a piston (10) of a reciprocating piston combustion engine of the two-stroke large diesel type, said piston ring (1) having an outer and inner radius (rₐ,rᵢ), a height (H) measured in the axial direction and a width (B) which corresponds to the difference between the outer and the inner radii as well as a running surface (2), an upper and lower surface (4, 5) and an inner surface (3) lying opposite the running surface (2), with at least the running surface having a protective layer (6a, 6b), **characterised in that** the height of the piston ring (1) is larger than or the same as the width of the piston ring.

2. A piston ring in accordance with claim 1 with a height/width ratio of at least 1.1:1, in particular at least 1.5:1.

3. A piston ring in accordance with one of the claims 1 or 2 wherein the protective layer is formed as a wear-reducing protective layer (6b) and/or as a running-in layer (6a).

4. A piston ring in accordance with any one of the previous claims with the cast iron containing lamellar graphite or vermicular graphite or spherical graphite.

5. A piston ring in accordance with one of the claims 3 or 4 wherein the wear-reducing protective layer or the running-in layer is applied galvanically or in a thermal spraying process and/or the wear-reducing protective layer is produced by diffusing foreign atoms into the base material.

6. A piston ring in accordance with any one of the previous claims with a running surface (2) the upper and lower edge of which is chamfered or rounded and is outwardly arched and/or conically shaped at least over a part of the axial height.

7. A piston ring in accordance with any one of the previous claims with a substantially gas impermeable joint.

8. A piston ring pack for a piston of a reciprocating piston combustion engine, said piston ring pack being made up of a plurality of piston rings in accordance with one of the previous claims, in particular of a plurality of piston rings of the same width.

9. A piston with at least one piston ring in accordance with any one of the claims 1 to 7 or with a piston ring pack in accordance with claim 8.

10. A reciprocating piston combustion engine of the two-stroke large diesel type with at least one piston in accordance with claim 9.

## Revendications

1. Segment de piston (1) avec un matériau de base en fonte pour un piston (10) d'un moteur à combustion interne à piston alternatif du type de grande construction diesel à deux temps, ledit segment de piston (1) présentant un rayon extérieur et intérieur (rₐ, rᵢ), une hauteur (H) mesurée dans la direction axiale et une largeur (B) qui correspond à la différence entre le rayon extérieur et intérieur, et comprenant une face de roulement (2), une surface supérieure et inférieure (4, 5) et une surface intérieure (3) opposée à la face de roulement (2), où au moins la face de roulement (2) présente une couche de protection (6a, 6b), **caractérisé en ce que** la hauteur du segment de piston (1) est supérieure ou égale à la largeur du segment de piston.

2. Segment de piston selon la revendication 1, avec un rapport hauteur/largeur d'au moins 1,1:1, en particulier d'au moins 1,5:1.

3. Segment de piston selon l'une des revendications 1 ou 2, où la couche de protection est réalisée comme couche de protection (6b) réduisant l'usure et/ou comme couche d'entrée (6a).

4. Segment de piston selon l'une des revendications précédentes, où la fonte contient du graphite en lamelles ou du graphite vermiculaire ou du graphite sphéroïdal.

5. Segment de piston selon l'une des revendications 3 ou 4, où la couche de protection réduisant l'usure respectivement la couche d'entrée est appliquée d'une manière galvanique ou par un procédé de projection thermique et/ou la couche de protection réduisant l'usure est produite par diffusion d'atomes étrangers dans le matériau de base.

6. Segment de piston selon l'une des revendications précédentes avec une face de roulement (2), dont le bord supérieur et inférieur est chanfreiné ou arrondi et est réalisé au moins sur une partie de la hauteur axiale d'une manière bombée vers l'extérieur et/ou conique.

7. Segment de piston selon l'une des revendications précédentes, avec une fermeture sensiblement étanche aux gaz.

8. Ensemble de segments de piston pour un piston d'un moteur à combustion interne à piston alternatif, ledit ensemble de segments de piston étant constitué de plusieurs segments de piston selon l'une des revendications précédentes, en particulier de plusieurs segments de piston de même largeur.

9. Piston avec au moins un segment de piston selon l'une des revendications 1 à 7 ou avec un ensemble de segments de piston selon la revendication 8.

10. Moteur à combustion interne à piston alternatif du type de grande construction diesel à deux temps, avec au moins un piston selon la revendication 9.
